# EUROPÄISCHE PATENTSCHRIFT

(11) **EP 3 737 969 B1**
(45) Veröffentlichungstag und Bekanntmachung des Hinweises auf die Patenterteilung: **10.04.2024**
(21) Anmeldenummer: 19710285.8
(22) Anmeldetag: 20.02.2019
(51) Int. Cl.: G01S 13/93, G08G 1/01, G01S 5/02, G01S 5/06, G01S 5/14, G05D 1/02, G01S 13/00, G08G 1/052

(54) **VERKEHRSSTEUERUNGSVERFAHREN UND ZUGEHÖRIGES SYSTEM**
TRAFFIC CONTROL METHOD AND CORRESPONDING SYSTEM
PROCÉDÉ DE COMMANDE DE TRAFIC ET SYSTÈME CORRESPONDANT

(30) Priorität: 28.02.2018 DE 102018203000
(43) Veröffentlichungstag der Anmeldung: 18.11.2020
(73) Patentinhaber: Robert Bosch GmbH, 70839 Gerlingen-Schillerhöhe (DE)
(72) Erfinder: MÜLLER, Dominikus Joachim, 82223 Eichenau (DE); ZERB, Marcus, 85662 Hohenbrunn (DE)
(74) Vertreter: Bee, Joachim
(86) Internationale Anmeldenummer: PCT/EP2019/054136
(87) Internationale Veröffentlichungsnummer: WO 2019/166289

(56) Entgegenhaltungen:
- WO-A1-2018/031971
- DE-A1-102016 213 224
- US-A1- 2014 060 949
- US-A1- 2016 025 844
- US-A1- 2016 343 252
- ASH MATTHEW ET AL: "A New Multistatic FMCW Radar Architecture by Over-the-Air Deramping", IEEE SENSORS JOURNAL, IEEE, USA, vol. 15, no. 12, 1 December 2015 (2015-12-01), pages 7045-7053, XP011586284, ISSN: 1530-437X, DOI: 10.1109/JSEN.2015.2466477 [retrieved on 2015-10-07]

## Beschreibung

Die Erfindung betrifft ein Verkehrssteuerungsverfahren gemäß dem Gattungsbegriff des Anspruchs 1sowie ein System zur Durchführung des Verkehrssteuerungsverfahrens gemäß dem Gattungsbegriff des Anspruchs 13.

Es ist bekannt, dass Bestrebungen gibt Verkehrssysteme derart weiterzuentwickeln, dass ein autonomes Fahren ermöglicht wird. Die Entwicklung erfolgt dabei stufenweise, insbesondere weil das autonome Fahren hinsichtlich der Sicherheit großen Anforderungen unterworfen ist. Die Autonomie hält daher zum Teil nur teilweise Einzug in bestehende Verkehrssysteme. Im Zuge der stufenweisen Fortentwicklung im Bereich des (teil-)autonomen Fahrens ist es von hoher Bedeutung die Position des Fahrzeuges in Bezug auf dessen Umfeld zu kennen.

Mit steigender Autonomiestufe werden auch die Anforderungen, die an ein System zur Lokalisierung des Fahrzeuges zu stellen sind, immer schärfer. Es ist bekannt, dass aktuell entwickelte und betriebene Fahrzeuge über eine ganze Reihe von Assistenzsystemen verfügen, die hierfür genutzt werden können. Für die Lokalisierung werden beispielsweise Systeme auf Basis der globalen Navigationssatelliten genutzt und sind am weitesten verbreitet. In Verbindung mit geeignetem Kartenmaterial kann hiermit eine Routenführung vorgenommen werden.

Die Position des Fahrzeugs kann mit diesen Systemen auf einige Meter genau ermittelt werden, was bei einigen Situationen zu ungenau wäre. Durch die Verwendung von Korrekturdaten lässt sich die Genauigkeit noch weiter steigern, Mehrwege-Effekte im urbanen Raum verhindern jedoch letztlich eine hochpräzise Lokalisierung.

Hiervon unbeeinflusst ist anderer Ansatz bei dem mit optischen Systemen, insbesondere Kameras gearbeitet wird. Bei diesen Lösungen versucht man beispielsweise im Fahrzeug ein möglichst detailliertes Abbild der Umgebung zu Erzeugen und dieses mit Kartenmaterial abzugleichen. Mit diesen Systemen lassen sich z.B. Spurhaltesysteme und Notbremsassistenten realisieren. Hierbei liegt der Fokus weniger auf der absoluten Positionsschätzung als vielmehr auf der Kollisionsvermeidung.

Es zeigt sich also, dass die bisher im Fahrzeug verbauten Assistenzsysteme die Anforderungen hinsichtlich Lokalisierungsgenauigkeit und Zuverlässigkeit nicht in ausreichendem Maße erfüllen können.

Aus der WO 2018/031971 A1 ist eine Konstellation von Ultrabreitband (UWB)-Knoten bekannt, von denen jeder mit einem UWB-Transceiver ausgestattet ist, der sowohl als monostatisches/bi-statisches Radar arbeitet, und die eine präzise Positionsbestimmung sowohl teilnehmender als auch nicht teilnehmender beweglicher Objekte ermöglicht. Die UWB-Konstellation identifiziert und lokalisiert Objekte innerhalb eines geographischen Gebiets mit Hilfe einer Mehrweg- Signalanalyse, die ein Belegungsraster bildet. Das daraus resultierende Belegungsraster kann geparkte Autos, Fußgänger, Hindernisse und dergleichen identifizieren, um autonome Fahrzeugoperationen, Sicherheitsprotokolle, Verkehrsmanagement, Priorisierung von Notfallfahrzeugen, Kollisionsvermeidung und dergleichen zu erleichtern.

Die der Erfindung zugrundeliegende Aufgabe ist es eine Lösung für zumindest teilautonome Systeme anzugeben, die die Nachteile des Standes der Technik überwindet.

Diese Aufgabe wird ausgehend von dem Verkehrssteuerungsverfahren gemäß Gattungsbegriff des Anspruchs 1 durch dessen kennzeichnenden Merkmale gelöst, sowie ausgehend von dem System zur Durchführung des Verkehrssteuerungsverfahrens gemäß Anspruch 13 durch dessen Merkmale gelöst.

Bei dem erfindungsgemäßen Verkehrssteuerungsverfahren werden entlang eines von Verkehrsteilnehmern frequentierten Ortes eine Vielzahl erster Radarsensoren und zumindest von Teilen der Verkehrsteilnehmer zumindest ein mitgeführter zweiter Radarsensor betrieben, wobei jeder zweite Radarsensor elektromagnetische Signale emittiert und wobei zumindest Signalanteile der emittierten Signale durch die ersten Radarsensoren Z empfangen werden und wobei das Empfangen der Signalanteile durch die ersten Radarsensoren derart diskriminiert erfolgt, dass jeder diskriminierte Signalanteil zu einer Bestimmung von verkehrsrelevanten Parametern, insbesondere Position und Geschwindigkeit, je Verkehrsteilnehmer herangezogen wird, wobei die Diskriminierung aufgrund zumindest einer durch den zweiten Radarsensor emittierten und von ersten Radarsensoren empfangenen ersten Information, insbesondere eine eindeutige Identifikation, erfolgt und wobei eine Synchronisation der ersten Radarsensoren auf den zweiten Radarsensor aufgrund zumindest einer durch den zweiten Radarsensor emittierten und von ersten Radarsensoren empfangenen zweiten Information erfolgt.

Das erfindungsgemäße Verfahren bietet den Vorteil, dass die Reichweite, welche durch die Sensoren erzielt werden kann deutlich gesteigert ist. Zudem ist es auch genauer und weniger störungsanfällig.

Der Radarsensor stellt ermöglicht die Implementierung des Verfahrens und ermöglicht und verwirklicht damit die gleichen Vorteile wie die des Verfahrens.

Das Gleiche gilt für das Radarsensornetzwerk, welches durch eine Vielzahl gemäß dem Verfahren und seinen Weiterbildungen funktional verbundenen erfindungsgemäßen Radarsensoren gekennzeichnet ist.

Vorteilhafte Weiterbildungen sind in den Unteransprüchen gegeben.

Bei einer Weiterbildung des erfindungsgemäßen Verkehrssteuerungsverfahrens werden die ersten Radarsensoren derart funktional verbunden und gesteuert, dass sie als Verbund betrieben werden. Verbund bedeutet und bewirkt beispielsweise eine geeignet Verbindung und/oder Steuerungen, die eine Synchronisierung ermöglichen von zumindest Teilen der ersten Radarsensoren.

Wird das erfindungsgemäße Verkehrssteuerungsverfahren derart weitergebildet, dass die ersten Radarsensoren derart funktional verbunden und gesteuert werden, dass sie zumindest je zweiten Radarsensor bezüglich zumindest seines emittierten Signalanteils synchron betrieben werden, ermöglicht dies eine akkurate Diskriminierung und Analyse der Signale und somit akkurate Bestimmung der verkehrsrelevanten Parameter.

Eine gute Basis für die Diskriminierung ist gegeben, wenn das erfindungsgemäße Verkehrssteuerungsverfahren derart weitergebildet wird, dass die Diskriminierung aufgrund zumindest einer dem Verbund verfügbaren Information erfolgt.

Erfindungsgemäß ist das Verkehrssteuerungsverfahren derart ausgebildet, dass eine Diskriminierung aufgrund zumindest einer durch den zweiten Radarsensor emittierten und von ersten Radarsensoren empfangenen ersten Information, insbesondere eine eindeutige Identifikation, erfolgt. Hierdurch ist ein sehr akkurates und einfaches Mittel zur Diskriminierung gegeben, da die hierfür wesentliche Information bereits im Signal enthalten ist.

Erfindungsgemäß ist das Verkehrssteuerungsverfahren derart ausgebildet, dass eine Synchronisation der ersten Radarsensoren auf den zweiten Radarsensor aufgrund zumindest einer durch den zweiten Radarsensor emittierten und von ersten Radarsensoren empfangenen zweiten Information erfolgt. Auch hier ist ein sehr akkurates und einfaches Mittel zur Synchronisation gegeben, da die hierfür wesentliche Information bereits im Signal enthalten ist.

Eine aufgrund ihrer Verbreitung gut zu implementierende Methode ist gegeben, wenn das Verkehrssteuerungsverfahren derart weitergebildet wird, dass die vom zweiten Radarsensor emittierte zweite Information als so genannter "Chirp" ausgestaltet wird.

Bevorzugt wird das Verkehrssteuerungsverfahren derart weitergebildet, dass die vom zweiten Radarsensor emittierte zweite Information als so genannter, insbesondere dem "Chirp" vorhergehende, so genannte "Chirp-Sequenz" ausgestaltet wird.

Gemäß einer weiteren vorteilhaften Weiterbildung des erfindungsgemäßen Verkehrssteuerungsverfahrens werden die Radarsensoren, insbesondere längsseitig, angeordnet entlang von zumindest Teilen des Ortes, insbesondere von Verkehrswegen, Knotenpunkten, wie beispielsweise Kreuzungsbereichen, Überwegen sowie Parkhäusern oder vergleichbaren frequentierten Orten, betrieben.

Ein längsseitiges Anordnen mehrerer Sensoren erhöht die Genauigkeit und ist zudem in die typischen geographischen Gegebenheiten im Verkehr gut zu integrieren.

Vorzugsweise wird das erfindungsgemäße Verkehrssteuerungsverfahren derart weitergebildet, dass die ersten Radarsensoren nach Art der bistatischer Radarsysteme zumindest zeitweise ausschließlich als Empfänger betrieben werden. Wenn die ersten Radarsensoren zumindest zeitweise ausschließlich als Empfänger betrieben werden, ist eine Konzentration auf die seitens des zweiten Radarsensors emittierten Wellen die Folge. Die Erkennung und Analyse verbessert sich daher. Zudem kann Energie gespart werden. Es ist daher auch eine generelle Nutzung nur als Empfänger zu bevorzugen.

Diese Vorteile kommen am Besten zur Geltung, wenn das erfindungsgemäße Verkehrssteuerungsverfahren derart weitergebildet wird, dass die zweiten Radarsensoren nach Art der bistatischer Radarsysteme als Sender betrieben werden.

Gemäß einer weiteren Weiterbildung des Verkehrssteuerungsverfahrens werden die ersten und/oder die zweiten Radarsensoren als, vorzugsweise frequenzmodulierte, Dauerstrichradare, insbesondere gemäß FMCW, betrieben. Diese Radare ermöglichen eine hohe Genauigkeit und unterstützen aufgrund ihrer Verbreitung auch eine Implementierung des Verfahrens.

Wird das Verkehrssteuerungsverfahren derart weitergebildet, dass zumindest Teile der ersten Radarsensoren als Mehrkanalsysteme betrieben werden, ist eine Richtungsbestimmung eingehender Signale möglich, was für eine bessere Analyse der verkehrsrelevanten Daten sorgen bzw. diese noch akkurater machen kann.

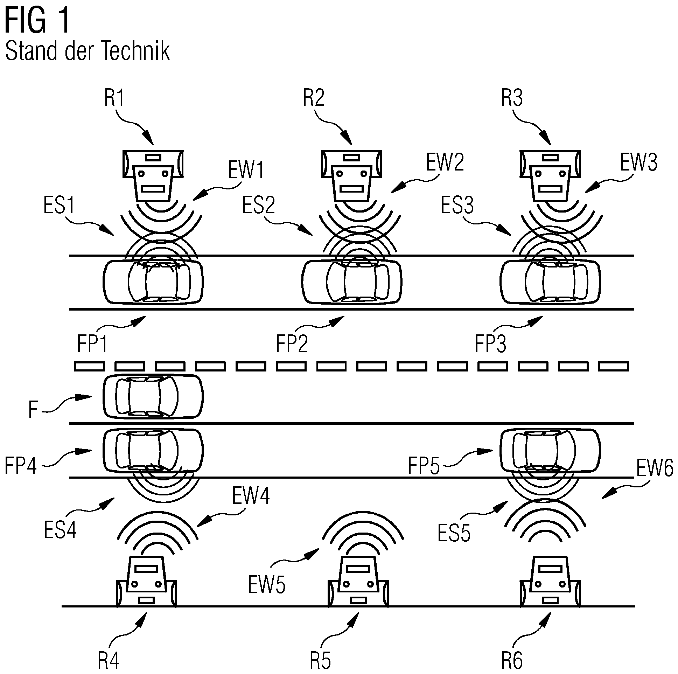

Weitere Einzelheiten und Vorteile der Erfindung werden ausgehend von in Figur 1 und Figur 2 dargestellten Szenarien des Standes der Technik durch das in Figur 3 dargestellte Ausführungsbeispiel der Erfindung näher erläutert. Dabei zeigt die
- Figur 1: eine schematische Darstellung einer Anwendung von Radarsensoren zur Überwachung eines Parkraums gemäß Stand der Technik,

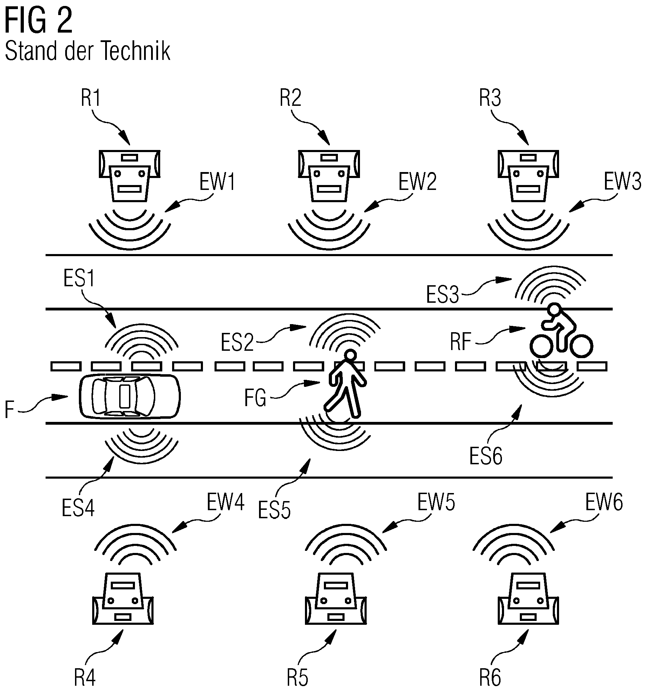

- Figur 2: eine schematische Darstellung einer Anwendung von Radarsensoren zur Detektion von Radfahrern Parkraums gemäß Stand der Technik,

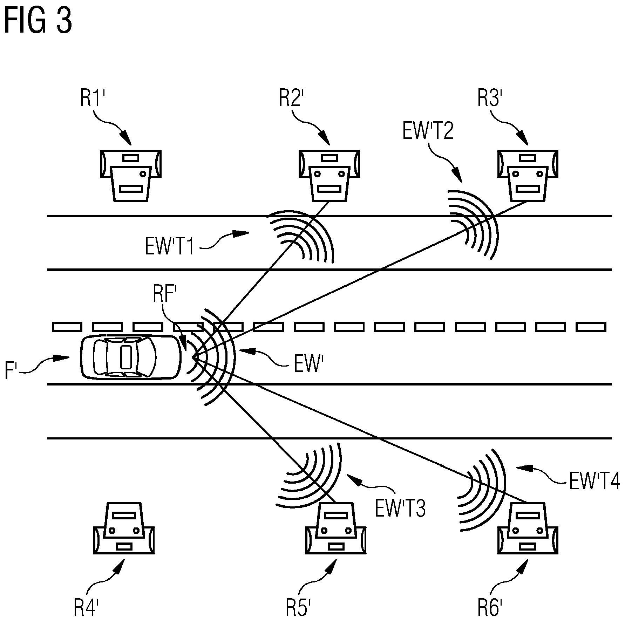

- Figur 3: eine schematische Darstellung eines Ausführungsbeispiels der Erfindung zur Lokalisierung von Fahrzeugen mittels Radarsensoren.

Die Figur 1 zeigt eine Abbildung von Radaren R1 ...R6 zur Überwachung des Parkraums. Dieser ist im dargestellten Beispiel durch Parkplätze entlang der Straße gegeben sind, die zum Teil durch parkende Fahrzeuge FP1...FP5 belegt sind. Auf der Straße befindet sich darüber hinaus ein fahrendes Fahrzeug F.

Das dargestellte Szenario geht nun vom Umstand aus, dass Fahrzeuge aktuell über eine ganze Reihe von Assistenzsystemen verfügen, wobei für die Lokalisierung der Fahrzeuge Systeme auf Basis der globalen Navigationssatelliten am weitesten verbreitet sind, die in Verbindung mit geeignetem Kartenmaterial hiermit eine Routenführung ermöglichen. Die Position eines Fahrzeugs kann dabei mit diesen Systemen auf einige Meter genau ermittelt werden.

Durch die Verwendung von Korrekturdaten lässt sich dabei die Genauigkeit noch weiter steigern. Mehrwege-Effekte im urbanen Raum verhindern jedoch eine hochpräzise Lokalisierung.

Die in Figur 1 dargestellte Anordnung von Radarsensoren R1...R6 setzt nun hier an und bietet eine genauere Lokalisierungsmöglichkeit, wie sie beispielsweise für die Überwachung der Belegung von Parkbuchten wie dargestellt von Vorteil sein kann.

Ein hierzu alternativer Ansatz besteht in der Nutzung optischer Systeme, beispielsweise von Kameras,. Bei diesem Ansatz versucht man bei fahrenden Fahrzeugen im Fahrzeug ein möglichst detailliertes Abbild der Umgebung zu Erzeugen und dieses mit Kartenmaterial abzugleichen. Mit diesen Systemen lassen sich z.B. Spurhaltesysteme und Notbremsassistenten realisieren. Hierbei liegt der Fokus weniger auf der absoluten Positionsschätzung als vielmehr auf der Kollisionsvermeidung.

Das dargestellte Szenario funktioniert jedoch anders. Bei den dargestellten Sensoren R1...R6 handelt es sich beispielsweise meist um frequenzmodulierte Dauerstrichradare (FMCW-Radar).

Ein FMCW-Radar ist in der Regel derart ausgestaltet, dass es eine hochfrequente elektromagnetische Welle EW1...EW6 mit definierter Bandbreite in eine Richtung sendet, welche durch die Richtwirkung der Sendeantenne vorgegeben ist. Trifft die elektromagnetische Welle auf ein Hindernis, so wird ein geringer Teil der Sendeleistung als Echosignal ES1...ES5 zurück zum Sender reflektiert und dort vom Empfänger R1...R6 registriert. Dieses Echosignal ES1...ES5 dient als Nachweis dafür, dass sich in Ausbreitungsrichtung der Welle ein Hindernis befindet.

Aus den Eigenschaften des Echosignals ES1...ES5, beispielsweise Stärke, Phasenlage oder Frequenzspektrum des Signals, kann auf Eigenschaften des Hindernisses, im gezeigten Fall die parkenden Fahrzeuge FP1...FP5, geschlossen werden.

In Figur 2 zeigt denselben Ort und teilweise gleiche Anordnungsmerkmale wie Figur 1, so dass diese gleich bezeichnet sind.

Im Gegensatz zur Figur 1 wird jedoch in dem in Figur 2 gezeigten Szenario eine Detektion von sich bewegenden Teilnehmern F, FG, RF, insbesondere die Detektion eines Radfahrers RF durchgeführt.

Hierzu geben die entlang der Straße angeordneten Radarsensoren R1...R6 wiederrum elektromagnetische Wellen EW1...EW6 ab, die an den dargestellten Hindernissen, einem fahrenden Fahrzeug F, einem Fußgänger FG sowie einem Radfahrer RF, jeweils Echosignale ES1...EW6 verursachen, die im Empfängermodus der Radarsensoren R1...R6 von den Radarsensoren R1...R6 empfangen werden.

Bei den beiden dargestellten Anwendungen arbeiten die Radarsensoren stets als Primärradar, d.h. als monostatisches Radar, bei dem die vom Sensor abgestrahlte Welle an Objekten reflektiert wird und die reflektierten Anteile zum Sender gelangen und dort analysiert werden.

In Figur 3 ist ein Ausführungsbeispiel der Erfindung zur Lokalisierung von Fahrzeugen mittels Radarsensoren dargestellt, dass sich demgegenüber abgrenzt, in dem es einen neuartigen Systemansatz vorstellt, welcher im Gegensatz zum Gezeigten auf verteilter Radarsensorik beruht, wobei sich die Verteilung auf Radarsensoren im Fahrzeug und Radarsensoren in der Infrastruktur bezieht.

Diese Verteilung kann dabei für diverse Anwendungen, eben auch für die in Figur 1 gezeigte Parkraumüberwachung, die in Figur 2 gezeigte Radfahrerdetektion im Kreuzungsbereich oder auch zur Verkehrsflussüberwachung usw. eingesetzt werden. Dabei werden entlang der Straße oder einem anderen Ort der hochfrequentiert ist ebenfalls zumindest an einer Seite des Ortes längs seitig Radarsensoren R1' ... R6' installiert.

Darüber hinaus ist die Erfindung nicht nur auf die Verwendung im Straßenverkehr beschränkt, sondern kann beispielsweise auch im Schienenverkehr zum Einsatz kommen.

In Figur 3 ist allerdings als Ausführungsbeispiel der Erfindung der grundsätzliche Aufbau des Systems ausgehend von den oben genannten Szenarien skizziert, welche im Straßenverkehr platziert sind.

Bei dem dargestellten Beispiel sendet erfindungsgemäß ein im Fahrzeug F' verbauter Radarsensor RF' zyklisch breitbandige Frequenzrampen EW' aus, beispielweise nach Art eines FMCW-Radars. Diese Frequenzrampen EW' werden von den entlang der Straße platzierten Radarsensoren R1' ... R6', also allgemein betrachtet in der Infrastruktur verbauten Radarsensoren empfangen.

Die Radarsensoren R1' ... R6' der Infrastruktur arbeiten gemäß dem Ausführungsbeispiel ebenfalls nach dem Prinzip eines FMCW-Radars, es wird jedoch im Gegensatz zum fahrzeugseitig verbauten Sensor RF' kein Signal abgestrahlt. Die Sensoren R1' ... R6' entlang der Straße werden in geeigneter Weiße auf einen ausgesendeten Chirp des Radarsensors im Fahrzeug synchronisiert. Dies kann bekannter Weise, beispielsweise über eine, dem eigentlichen Chirp vorausgehende, Chirp Sequenz erfolgen. In dieser Chirp-Sequenz kann zusätzlich auch ein Datenblock zur eindeutigen Identifikation mit übertragen werden.

Das Ausführungsbeispiel kann ebenso wie die Erfindung vorteilhalft weitergebildet werden, in dem die Sensoren R1' ... R6' in der Infrastruktur bevorzugt als Mehrkanalsysteme ausgestaltet sind, mit denen es auf analoger oder digitaler Basis, also durch analoges bzw. digitales Beamforming, möglich ist die Richtung aus der das Signal EW' eintrifft zu bestimmen. Eines der Vorteile des gezeigten Ausführungsbeispiels ergibt sich im Hinblick auf die Leistung. Hiermit können nämlich Genauigkeiten erreicht werden, die deutlich über denen von GPS basierten Systemen liegen.

Im Vergleich mit kamerabasierten Systemen ist das dargestellte erfindungsgemäße Ausführungsbeispiel deutlich unempfindlicher gegenüber Witterungseinflüssen wie Regen oder Nebel. Auch unterschiedliche Lichtverhältnisse haben keinen Einfluss auf die Performance des dargestellten Ausführungsbeispiels gemäß Erfindung. Im Vergleich zu Systemen die auf Ultrabreitbandtechnik basieren wird bei dem vorgestellten System Technologie genutzt, die sich im automobilen Umfeld bereits etabliert hat, so dass die

Erfindung mit weniger Änderungsaufwand implementiert werden kann. Die genannten Vorteile sind dabei nicht auf das Ausführungsbeispiel beschränkt, vielmehr treten sie auch bei anderen Einsatzgebieten auf.

Ein weiterer Vorteil der Erfindung bzw. des Ausführungsbeispiels ergibt sich aufgrund der derzeit regulatorisch für ACC-Radare zur Verfügung stehenden hohen Bandbreiten; diese verspricht bei einem erfindungsgemäßen Lokalisierungssystem basierend auf synchronisierten FMCW Radaren prinzipiell eine hohe Genauigkeit.

Dies kann erreicht werden, wenn beispielsweise die bereits in den Fahrzeugen F' vorhandenen Radarsensoren RF' durch die dezentral in der Infrastruktur verbauten, synchronisierte Empfänger R1' ... R6' ergänzt werden.

Aufgrund des erfindungsgemäßen Konzepts sind mit dem erfindungsgemäßen Lokalisierungssystem potentiell zudem große Reichweiten abdeckbar, beispielsweise >100m, da hier das vom fahrzeugseitig verbautem Sensor RF' abgestrahlte Signal EW' direkt vom Sensor R1' ... R6' in der Infrastruktur empfangen wird und es nicht einer Rückstreuung des Signals bedarf.

Die Erfindung hebt sich in vorteilhafter Weis von einem denkbaren alternativen Ansatz zur Lokalisierung ab, bei der die bekannten Systeme auf Basis der Ultrabreitbandtechnik ausgestaltet sind. Hierbei wird die Position über Laufzeitmessungen zwischen Sensoren im Fahrzeug und in der Infrastruktur verbauten Sensoren ermittelt. Diese Technologie ist in anderen Anwendungen bereits verbreitet und verspricht eine Genauigkeit von ca. +/- 10cm. Nachteilig hierbei ist die Tatsache, dass für ein solches System sowohl im Fahrzeug als auch in der Infrastruktur neu zu installierende Komponenten benötigt werden, während die Erfindung wie oben angemerkt auf bereits verbreitete bzw. gängige Elemente zurückgreifen kann, so dass die Implementierung der Erfindung kostengünstig und aufwandsarm von statten gehen kann.

Die Erfindung ist auch gegenüber einer Alternative von Vorteil, bei der optische Systeme in der Infrastruktur verbaut werden, beispielweise Stereo-Kameras, Lidar. Hiervon hebt sich die Erfindung dadurch ab, dass diese Systeme recht teuer sind und zudem bei diesen Systemen die Performance meist sehr stark von den Belichtungsverhältnissen und den Wetterbedingungen abhängt, während der erfindungsgemäße Einsatz von Radarsensoren hiervon unberührt bleibt.

## Patentansprüche

1. Verkehrssteuerungsverfahren, wobei entlang eines von Verkehrsteilnehmern frequentierten Ortes eine Vielzahl erster Radarsensoren (R1' - R6') und zumindest von Teilen der Verkehrsteilnehmer zumindest ein mitgeführter zweiter Radarsensor (RF') betrieben werden, wobei jeder zweite Radarsensor (RF') elektromagnetische Signale emittiert und wobei zumindest Signalanteile der emittierten Signale durch die ersten Radarsensoren (R1' - R6') empfangen werden und wobei das Empfangen der Signalanteile durch die ersten Radarsensoren (R1' - R6') derart diskriminiert erfolgt, dass jeder diskriminierte Signalanteil zu einer Bestimmung von verkehrsrelevanten Parametern, Position und Geschwindigkeit, je Verkehrsteilnehmer herangezogen wird, **dadurch gekennzeichnet, dass** die Diskriminierung aufgrund zumindest einer durch den zweiten Radarsensor (RF') emittierten und von ersten Radarsensoren (R1' - R6') empfangenen ersten Information, insbesondere eine eindeutige Identifikation, erfolgt und wobei eine Synchronisation der ersten Radarsensoren (R1' - R6') auf den zweiten Radarsensor (RF') aufgrund zumindest einer durch den zweiten Radarsensor (RF') emittierten und von ersten Radarsensoren (R1' - R6') empfangenen zweiten Information erfolgt

2. Verkehrssteuerungsverfahren nach dem vorhergehenden Anspruch, **dadurch gekennzeichnet, dass** die ersten Radarsensoren (R1' - R6') derart funktional verbunden und gesteuert werden, dass sie als Verbund betrieben werden.

3. Verkehrssteuerungsverfahren nach einem der vorhergehenden Ansprüche, **dadurch gekennzeichnet, dass** die ersten Radarsensoren (R1' - R6') derart funktional verbunden und gesteuert werden, dass sie zumindest je zweiten Radarsensor (RF') bezüglich zumindest seines emittierten Signalanteils synchron betrieben werden.

4. Verkehrssteuerungsverfahren nach einem der Ansprüche 2 bis 3, **dadurch gekennzeichnet, dass** die Diskriminierung aufgrund zumindest einer dem Verbund von ersten Radarsensoren (R1' - R6') verfügbaren ersten Information erfolgt

5. Verkehrssteuerungsverfahren nach einem der vorhergehenden Ansprüche, **dadurch gekennzeichnet, dass** die Signalanteile der, vom zweiter Radarsensor (RF'), emittierten Signale zumindest innerhalb des frequentierten Ortes durch die ersten Radarsensoren (R1' - R6') empfangen werden.

6. Verkehrssteuerungsverfahren nach Anspruch 5, **dadurch gekennzeichnet, dass** die vom zweiten Radarsensor (RF') emittierte zweite Information als Chirp ausgestaltet ist.

7. Verkehrssteuerungsverfahren nach Anspruch 6, **dadurch gekennzeichnet, dass** die vom zweiten Radarsensor (RF') emittierte zweite Information als, insbesondere Chirp vorhergehende, Chirp-Sequenz ausgestaltet ist.

8. Verkehrssteuerungsverfahren nach einem der vorhergehenden Ansprüche, **dadurch gekennzeichnet, dass** die ersten Radarsensoren (R1' - R6'), längsseitig, angeordnet entlang von zumindest Teilen des Ortes, insbesondere von Verkehrswegen, Knotenpunkten, wie beispielsweise Kreuzungsbereichen, Überwegen sowie Parkhäusern oder vergleichbaren frequentierten Orten, betrieben werden.

9. Verkehrssteuerungsverfahren nach einem der vorhergehenden Ansprüche, **dadurch gekennzeichnet, dass** die ersten Radarsensoren (R1' - R6') nach Art bistatischer Radarsysteme zumindest zeitweise ausschließlich als Empfänger betrieben werden.

10. Verkehrssteuerungsverfahren nach einem der vorhergehenden Ansprüche, **dadurch gekennzeichnet, dass** die zweiten Radarsensoren (RF') nach Art bistatischer Radarsysteme als Sender betrieben werden.

11. Verkehrssteuerungsverfahren nach einem der vorhergehenden Ansprüche, **dadurch gekennzeichnet, dass** die ersten Radarsensoren (R1' - R6') und/oder die zweiten Radarsenso-(RF') als, frequenzmodulierte, Dauerstrichradare, insbesondere gemäß FMCW, betrieben werden.

12. Verkehrssteuerungsverfahren nach einem der vorhergehenden Ansprüche, **dadurch gekennzeichnet, dass** zumindest Teile der ersten Radarsensoren (R1' - R6') als Mehrkanalsysteme betrieben werden.

13. System zur Durchführung des Verkehrssteuerungsverfahrens nach einem der Ansprüche 1 bis 12, das System umfassend die Vielzahl erster Radarsensoren (R1' - R6') entlang eines von Verkehrsteilnehmern frequentierten Ortes und den zumindest einen, von einem der Verkehrsteilnehmer mitgeführten, zweiten Radarsensor (RF').

## Claims

1. Traffic control method, wherein a multiplicity of first radar sensors (R1' - R6') and at least one second radar sensor (RF') carried at least by some of the road users are operated along a location frequented by road users, wherein each second radar sensor (RF') emits electromagnetic signals, and wherein at least signal components of the emitted signals are received by the first radar sensors (R1' - R6'), and wherein the signal components are received in a discriminated manner by the first radar sensors (Rl' - R6') such that each discriminated signal component is used to determine traffic-relevant parameters, the position and speed for each road user, **characterized in that** the discrimination is carried out on the basis of at least one item of first information emitted by the second radar sensor (RF') and received by first radar sensors (R1'-R6'), in particular a unique identification, and wherein the first radar sensors (Rl' - R6') are synchronized with the second radar sensor (RF') on the basis of at least one item of second information emitted by the second radar sensor (RF') and received by first radar sensors (Rl' - R6').

2. Traffic control method according to the preceding claim, **characterized in that** the first radar sensors (Rl' - R6') are functionally connected and controlled in such a manner that they are operated as a group.

3. Traffic control method according to one of the preceding claims, **characterized in that** the first radar sensors (Rl' - R6') are functionally connected and controlled in such a manner that they are operated synchronously at least for each second radar sensor (RF') with respect to at least its emitted signal component.

4. Traffic control method according to one of Claims 2 to 3, **characterized in that** the discrimination is carried out on the basis of at least one item of first information available to the group of first radar sensors (Rl' - R6').

5. Traffic control method according to one of the preceding claims, **characterized in that** the signal components of the signals emitted by the second radar sensor (RF') are received by the first radar sensors (Rl' - R6') at least within the frequented location.

6. Traffic control method according to Claim 5, **characterized in that** the second information emitted by the second radar sensor (RF') is in the form of a chirp.

7. Traffic control method according to Claim 6, **characterized in that** the second information emitted by the second radar sensor (RF') is in the form of a chirp sequence, in particular preceding the chirp.

8. Traffic control method according to one of the preceding claims, **characterized in that** the first radar sensors (Rl' - R6') are operated on the longitudinal side, arranged along at least parts of the location, in particular traffic routes, junctions, for example intersection regions, crosswalks and car parks or comparable frequented locations.

9. Traffic control method according to one of the preceding claims, **characterized in that** the first radar sensors (Rl' - R6') are operated at least occasionally exclusively as receivers in the manner of bistatic radar systems.

10. Traffic control method according to one of the preceding claims, **characterized in that** the second radar sensors (RF') are operated as transmitters in the manner of bistatic radar systems.

11. Traffic control method according to one of the preceding claims, **characterized in that** the first radar sensors (Rl' - R6') and/or the second radar sensors (RF') are operated as frequency-modulated continuous wave radars, in particular according to FMCW.

12. Traffic control method according to one of the preceding claims, **characterized in that** at least some of the first radar sensors (Rl' - R6') are operated as multichannel systems.

13. System for carrying out the traffic control method according to one of Claims 1 to 12, the system comprising the multiplicity of first radar sensors (Rl' - R6') along a location frequented by road users and the at least one second radar sensor (RF') carried by one of the road users.

## Revendications

1. Procédé de commande de trafic, dans lequel, le long d'un lieu fréquenté par des usagers de la route, une pluralité de premiers capteurs radar (Rl' à R6') est exploitée, et au moins un deuxième capteur radar (RF') emporté par au moins certains des usagers de la route est exploité, dans lequel chaque deuxième capteur radar (RF') émet des signaux électromagnétiques, et dans lequel au moins des composantes de signal des signaux émis sont reçues par les premiers capteurs radar (Rl' à R6'), et dans lequel la réception des composantes de signal par les premiers capteurs radar (Rl' à R6') a lieu de manière discriminée de telle sorte que chaque composante de signal discriminée est utilisée pour déterminer des paramètres liés au trafic, la position et la vitesse pour chaque usager de la route, **caractérisé en ce que** la discrimination, en particulier une identification univoque, a lieu sur la base d'au moins une première information émise par le deuxième capteur radar (RF') et reçue par les premiers capteurs radar (Rl' à R6'), et dans lequel une synchronisation des premiers capteurs radar (Rl' à R6') avec le deuxième capteur radar (RF') a lieu sur la base d'au moins une deuxième information émise par le deuxième capteur radar (RF') et reçue par les premiers capteurs radar (Rl' à R6').

2. Procédé de commande de trafic selon la revendication précédente, **caractérisé en ce que** les premiers capteurs radar (Rl' à R6') sont reliés sur le plan fonctionnel et commandés de manière à fonctionner comme un ensemble.

3. Procédé de commande de trafic selon l'une quelconque des revendications précédentes, **caractérisé en ce que** les premiers capteurs radar (Rl' à R6') sont reliés sur le plan fonctionnel et commandés de manière à ce qu'ils fonctionnent de façon synchrone au moins pour chaque deuxième capteur radar (RF') par rapport à au moins la composante de signal émise par celui-ci.

4. Procédé de commande de trafic selon l'une quelconque des revendications 2 à 3, **caractérisé en ce que** la discrimination a lieu sur la base d'au moins une première information disponible pour l'ensemble de premiers capteurs radar (Rl' à R6').

5. Procédé de commande de trafic selon l'une quelconque des revendications précédentes, **caractérisé en ce que** les composantes de signal des signaux émis par le deuxième capteur radar (RF') sont reçues au moins à l'intérieur du lieu fréquenté par les premiers capteurs radar (Rl' à R6').

6. Procédé de commande de trafic selon la revendication 5, **caractérisé en ce que** la deuxième information émise par le deuxième capteur radar (RF') se présente sous forme de stridulation.

7. Procédé de commande de trafic selon la revendication 6, **caractérisé en ce que** la deuxième information émise par le deuxième capteur radar (RF') se présente sous forme de séquence de stridulations, précédant en particulier ladite stridulation.

8. Procédé de commande de trafic selon l'une quelconque des revendications précédentes, **caractérisé en ce que** les premiers capteurs radar (Rl' à R6') fonctionnent longitudinalement en étant disposés le long d'au moins certaines parties du lieu, en particulier de voies de circulation, de carrefours, comme par exemple des zones d'intersection, des passerelles ainsi que des parkings ou des lieux fréquentés comparables.

9. Procédé de commande de trafic selon l'une quelconque des revendications précédentes, **caractérisé en ce que** les premiers capteurs radar (R1' à R6') fonctionnent à la manière de systèmes radar bistatiques au moins temporairement exclusivement en tant que récepteurs.

10. Procédé de commande de trafic selon l'une quelconque des revendications précédentes, **caractérisé en ce que** les deuxièmes capteurs radar (RF') fonctionnent à la manière de systèmes radar bistatiques en tant qu'émetteurs.

11. Procédé de commande de trafic selon l'une quelconque des revendications précédentes, **caractérisé en ce que** les premiers capteurs radar (Rl' à R6') et/ou les deuxièmes capteurs radar (RF') fonctionnent en tant que radars à onde entretenu, modulés en fréquence, en particulier selon FMCW.

12. Procédé de commande de trafic selon l'une quelconque des revendications précédentes, **caractérisé en ce qu'**au moins certains des premiers capteurs radar (Rl' à R6') fonctionnent en tant que systèmes multicanaux.

13. Système permettant d'exécuter le procédé de commande de trafic selon l'une quelconque des revendications 1 à 12, le système comprenant la pluralité de premiers capteurs radar (Rl' à R6') le long d'un lieu fréquenté par des usagers de la route et ledit au moins un deuxième capteur radar (RF') emporté par l'un des usagers de la route.
